# EUROPÄISCHE PATENTSCHRIFT

(11) **EP 2 526 290 B1**
(45) Veröffentlichungstag und Bekanntmachung des Hinweises auf die Patenterteilung: **18.03.2015**
(21) Anmeldenummer: 11701790.5
(22) Anmeldetag: 21.01.2011
(51) Int. Cl.: F03D 7/02, F03D 11/00

(54) **WINDENERGIEANLAGE MIT BLATTHEIZUNGSVORRICHTUNG**
WIND ENERGY PLANT HAVING A BLADE HEATER
ÉOLIENNE POURVUE D'UN DISPOSITIF DE CHAUFFAGE DE PALE

(30) Priorität: 21.01.2010 DE 102010005286
(43) Veröffentlichungstag der Anmeldung: 28.11.2012
(73) Patentinhaber: Senvion SE, 22297 Hamburg (DE)
(72) Erfinder: PETERS, Matthias, 25704 Elpersbüttel (DE); VON MUTIUS, Martin, 24358 Ascheffel (DE)
(74) Vertreter: Glawe, Delfs, Moll
(86) Internationale Anmeldenummer: PCT/EP2011/050831
(87) Internationale Veröffentlichungsnummer: WO 2011/089221

(56) Entgegenhaltungen:
- WO-A2-2007/129907
- DE-A1-102007 016 023
- DE-A1-102007 054 215
- DE-A1-102008 025 944

## Beschreibung

Die Erfindung betrifft eine Windenergieanlage mit einem Rotor zum Antrieb eines Generators, wobei der Rotor Blätter aufweist, die sowohl pitchverstellbar als auch durch eine Blattheizung beheizbar sind.

Windenergieanlagen eignen sich als dezentrale Erzeuger elektrischer Energie insbesondere auch zur Anwendung in dünn besiedelten Gebieten mit günstigen Windverhältnissen. Viele dieser dünn besiedelten Gebiete liegen in klimatisch ungünstigen Zonen. Dazu zählen insbesondere auch Gebiete mit kaltem Klima. Um Windenergieanlagen für den Betrieb unter "Cold Climate"-Bedingungen zu ertüchtigen, ist in der Regel eine Blattheizung für die Rotorblätter erforderlich. Denn es hat sich gezeigt, dass ohne eine solche Heizung im Betrieb auf den Rotorblättern Eis gebildet wird bzw. sich ansammelt, wobei sich das Eis in mehrfacher Hinsicht nachteilig auswirkt. Zum einen verändert es das aerodynamische Profil der Rotorblätter, was gerade bei sehr fortgeschrittenem aerodynamischem Design der Rotorblätter in der Regel zu erheblichen Verschlechterungen führt. Des Weiteren erhöht sich durch die Eisbildung das Gewicht des Rotorblatts, wodurch die von der Aufhängung der Rotorblätter aufzunehmenden Kräfte zunehmen; das gilt insbesondere im Betrieb bei höheren Drehzahlen und entsprechend anwachsenden Fliehkräften oder bei durch unterschiedliche Eisbildung an den jeweiligen Rotorblättern verursachte Unwuchten der Nabe insgesamt. Schließlich besteht noch eine nicht unerhebliche Gefährdung von Personen und Gegenständen im Umkreis der Windenergieanlage durch Eiswurf, d. h. durch sich von Rotorblättern lösende und weg geschleuderte Eisbruchstücke. Im allgemeinen wird die Windenergieanlage bei Eisansatz an den Rotorblättern stillgesetzt. Um diese Nachteile zu vermeiden, kann eine Blattheizung vorgesehen sein. Wegen der Größe der Rotorblätter und mitunter harschen klimatischen Bedingungen ist für die Blattheizung aber verhältnismäßig viel Heizleistung erforderlich. Sie an dem Ort, an dem sie benötigt wird, nämlich in der Nabe des Rotors, bereitzustellen erfordert einigen Zusatzaufwand, wodurch Mehrkosten entstehen.

Um ohne Verstärkung der in der Nabe zur Verfügung stehenden Leistung dennoch einen großen elektrischen Verbraucher, wie eine Blattheizung, versorgen zu können, ist eine Konstruktion bekannt geworden, bei der die Windenergieanlage während der Beheizung der Rotorblätter stillgesetzt wird (DE 103 23 785 A1). Dies hat zwar den Nachteil, dass während der Phasen, in denen die Rotorblätter beheizt werden, keine elektrische Leistung mehr von der Windenergieanlage erzeugt wird. Dafür hat dies den Vorteil, dass im Stillstand kaum Leistung für den Eigenbedarf der Windenergieanlage aufgewendet zu werden braucht, und damit die ganze in der Nabe zur Verführung stehende elektrische Leistung zum Heizen der Rotorblätter verwendet werden kann. Üblicherweise erfolgt das Beheizen über eine Zeitdauer bis zu 15 Minuten, und danach wird die Windenergieanlage wieder angefahren. Obwohl sich das Beheizen mit einer derartigen Stoppeinrichtung grundsätzlich bewährt hat, hat dies doch den Nachteil, dass während der Beheizungszeit die Windenergieanlage keine elektrische Energie erzeugt, also der Ertrag verringert wird. Dies wird noch dadurch verschlimmert, dass das Wiederanfahren im Anschluss recht zeitaufwendig ist, was die Energieproduktion durch die Windenergieanlage weiter verringert. Vor allem liegt ein schwerer Nachteil aber darin, dass der Eisansatz an sich nicht verhindert wird und damit eine Gefährdung des Umfelds nicht auszuschließen ist.

DE 10 2007 016023 zeigt ebenfalls eine Winderenergieanlage gemäß dem Stand der Technik.

Der Erfindung liegt daher die Aufgabe zu Grunde, Windenergieanlagen des eingangs genannten Typs dahingehend zu verbessern, dass auch an der Nabe große Verbraucher elektrischer Leistung, wie eine Blattheizungsvorrichtung, betrieben werden können und dabei eine aufwendige Verstärkung der Leistungszuführung vermieden wird.

Die erfindungsgemäße Lösung liegt in den Merkmalen des unabhängigen Anspruchs. Vorteilhafte Weiterbildungen sind Gegenstand der abhängigen Ansprüche.

Bei einer Windenergieanlage umfassend einen Rotor mit Blättern und einem damit angetriebenen Generator zur Erzeugung elektrischer Energie, wobei die Blätter pitchverstellbar sind und ein Pitchsystem zur Verstellung des Pitchwinkels der Blätter vorgesehen ist, das aus einer Nabenleistungsquelle gespeist wird, ist erfindungsgemäß ein Pitchleistungssteuergerät vorgesehen, welches die von der Nabenleistungsquelle bereitgestellte Leistung zwischen Pitchsystem und elektrischem Zusatzverbraucher dynamisch verteilt, und weiter auf das Pitchsystem so einwirkt, dass dessen Leistungsaufnahme im Hochlastbetrieb verringert ist.

Nachfolgend seien zunächst einige verwendete Begriffe erläutert:
Unter einem elektrischen Zusatzverbraucher wird eine Einrichtung verstanden, die an der Rotornabe angeordnet ist und eine für den Grundbetrieb der Windenergieanlage nicht erforderliche zusätzliche Funktionalität ausübt. Hierunter fallen insbesondere Großverbraucher, die jeweils für sich eine Leistungsaufnahme haben, die mindestens ein Fünftel, vorzugsweise die Hälfte, der in der Nabe zur Verfügung stehenden elektrischen Leistung beträgt. Beispiele für solche Zusatzverbraucher sind Blattheizeinrichtungen für die Rotorblätter, insbesondere mit Widerstandsheizung oder Heizlüfter, Klimageräte zum Entfeuchten der Nabe, Kühlgeräte für Heißland-Ausführungen, leistungsstarke Warn- und Sicherungseinrichtungen, wie hochintensive Gefahrenbefeuerung der Rotorblätter, oder besonders aufwendige Messwerterfassungssysteme, wie LIDAR oder Phased-Array-Radarsysteme zur Wind- bzw. Turbulenzerkennung und -bestimmung.

Unter einem Hochlastbetrieb wird verstanden, dass die Windenergieanlage so eingerichtet ist, dass vorrangig eine Versorgung des elektrischen Zusatzverbrauchers erfolgt. Der Unterschied zum Normalbetrieb liegt also darin, dass im Normalbetrieb eine Drehzahlregelung der Windenergieanlage Vorrang hat, die optimalen Energieertrag ermöglicht, und ein Betrieb des elektrischen Zusatzverbrauchers nicht oder nur in einem geringen Umfang erfolgt.

Unter dynamisch verteilt wird verstanden, dass die vom Pitchleistungssteuergerät an das Pitchsystem bzw. den elektrischen Zusatzverbraucher übermittelte Leistung während des Betriebs veränderlich ist. Insbesondere kann dynamisch verteilt auch bedeuten, dass das Pitchleistungssteuergerät den Leistungsbedarf des elektrischen Zusatzverbrauchers regelt. Eine dynamische Verteilung kann somit auch durch Ein- oder Ausschalten bzw. durch Arbeitspunkteinstellung der elektrischen Verbraucher erfolgen.

Unter einer Nabenleistungsquelle wird eine in ihrer Kapazität begrenzte Quelle für elektrische Energie verstanden, die elektrische Leistung in der Rotorbaugruppe zur Verfügung stellt. Meist wird dies ein leistungsbegrenzendes Übertragungssystem von der Windenergieanlage sein, an welcher der Rotor drehbar angeordnet ist. Beispielsweise kann dies Übertragungssystem ein Schleifring sein und in diesem Fall ist die Nabenleistungsquelle durch die maximal übertragbare Leistung des Schleifrings begrenzt. Die Nabenleistungsquelle kann aber auch die elektrische Leistung autark erzeugen, bspw. durch einen Akkumulator und/oder einen Wellengenerator.

Die Erfindung beruht auf dem Gedanken, die von der Nabenleistungsquelle im Rotor zur Verfügung gestellte elektrische Leistung im Hochlastbetrieb anders als im Normalbetrieb aufzuteilen, nämlich so, dass die vom Pitchsystem aufgenommene elektrische Leistung verringert und damit in solchen Grenzen gehalten ist, dass ein Großteil der elektrischen Leistung für den Betrieb des elektrischen Zusatzverbrauchers zur Verfügung gestellt werden kann. Der elektrische Zusatzverbraucher kann so ohne Einschränkungen mit voller Leistung betrieben werden. Im Fall einer Blattheizung heißt dies die volle Heizwirkung, wie sie herkömmlicherweise nur bei still gesetzter Windenergieanlage erreicht werden konnte. Im Kern sieht die Erfindung also eine dynamisch modifizierte Leistungsverzweigung vor, wobei im Hochlastbetrieb die Leistungsaufnahme des Pitchsystems verringert ist und damit zusätzliche Leistung für den Betrieb des elektrischen Zusatzverbrauchers bereitgestellt werden. Eine Verstärkung der Nabenleistungsquelle oder erhebliche Betriebseinschränkungen wie im Stand der Technik können so vermieden werden. Dank der Erfindung reicht also trotz des erheblichen Leistungsbedarfs für den elektrischen Zusatzverbraucher die bereits vorhandenen herkömmlichen Nabenleistungsquelle aus. Es ist kein Zusatzaufwand zur Verstärkung der Nabenleistungsquelle erforderlich.

Vorzugsweise ist das Pitchleistungssteuergerät so ausgebildet, dass die Begrenzung der Leistung nicht starr erfolgt, sondern adaptiv. Dazu ist zweckmäßigerweise eine Adaptionseinrichtung vorgesehen, welche das Pitchleistungssteuergerät überwacht und auf dieses einwirkt. Die Adaptionseinrichtung kann auf verschiedene Weise ausgebildet sein. So kann bei einer ersten Ausführungsart die Adaptionseinrichtung ein Stromkontrollmodul aufweisen. Hierbei erfolgt eine Verringerung der von dem Pitchsystem aufgenommenen Leistung dann, wenn die Nabenleistungsquelle mit einem einstellbaren Höchstgrad (bspw. 90 %) belastet ist. Damit ist sichergestellt, dass auch bei hoher Aktivität stets ausreichend Leistung für den elektrischen Zusatzverbraucher zur Verfügung steht. Vorzugsweise umfasst dies einen Belastungssensor. Dieser kann am Pitchantrieb ausgebildet sein, bspw. als Stromsensor (direkte Messung) oder es kann die Leistungsaufnahme bestimmt werden aus Signalen für Pitchverstellgeschwindigkeit und Beschleunigung (indirekte Messung); ergibt sich hierbei, dass eine hohe Belastung des Pitchsystems vorliegt, so erfolgt ein entsprechender Eingriff zur Verringerung der Leistungsaufnahme. Vorzugsweise ist das Stromkontrollmodul dazu ausgebildet, auf Parameter des Pitchsystems einzuwirken, bspw. in der Pitchsteuerung die Verstärkung eines Reglers oder die maximal zulässige Pitchverstellgeschwindigkeit zu reduzieren.

Weiter kann vorgesehen sein, dass die Adaptionseinrichtung ein Drosselmodul aufweist. Es bestimmt für den jeweiligen Betriebspunkt der Windenergieanlage einen entsprechenden gedrosselten Betriebspunkt, in dem die von dem Generator erzeugte Drehzahl bzw. Leistung verringert sind. Damit wird die Reserve bis zum Erreichen der jeweiligen Grenzwerte (Drehzahl bzw. Leistung) vergrößert, so dass nachfolgend unter Ausnutzung dieser Reserve erheblich weniger Pitchaktivität erforderlich wird. Zweckmäßigerweise ist das Drosselmodul weiter dazu ausgebildet, die Regelgüte der Pitchsteuerung zu verringern. Dadurch werden Toleranzbänder aufgeweitet und in der Folge verringert sich die Aktivität des Pitchsystems, wodurch schließlich mehr Leistung aus der Nabenleistungsquelle für den elektrischen Zusatzverbraucher zur Verfügung steht.

Zur Absicherung kann die Adaptionseinrichtung weiter mit einem Unterbrechungsmodul versehen sein. Es ist dazu ausgebildet, beim Auftreten von vorbestimmten Zuständen der Windenergieanlage ein Suspend-Signal an das Pitchleistungssteuergerät auszugeben und damit den Hochlastbetrieb zu sperren. Vorzugsweise ist das Unterbrechungsmodul mit einer Einrichtung zum Erkennen eines Spannungseinbruchs verbunden. Damit kann im Fall einer Netzstörung bei einem Spannungseinbruch die Windenergieanlage den Hochlastbetrieb unterbrechen, und damit ihre gesamten Ressourcen zur Behandlung des Spannungseinbruchs zur Verfügung stellen. Des Weiteren kann eine Einrichtung zur Erkennung einer Netzwiederkehr vorgesehen sein. Kommt es jedoch zu einer Wiederkehr des Netzes, so hat das Anfahren der Windenergieanlage und die dazu erforderlichen Veränderungen des Pitches Priorität, so dass dazu der elektrische Zusatzverbraucher zweckmäßigerweise abgeschaltet ist. Das Unterbrechungsmodul kann weitere Signaleingänge für bestimmte Hochlastzustände des Pitchsystems aufweisen, insbesondere für das Erreichen des Maximalstroms im Pitchsystem oder die Durchführung einer Notfahrt.

Die Erfindung erstreckt sich ferner auf ein Verfahren gemäß dem unabhängigen Anspruch. Zur näheren Erläuterung wird auf die vorstehende Beschreibung verwiesen.

Die Erfindung wird nachfolgend unter Bezugnahme auf die beigefügte Zeichnung anhand eines Ausführungsbeispiels erläutert. Es zeigen:

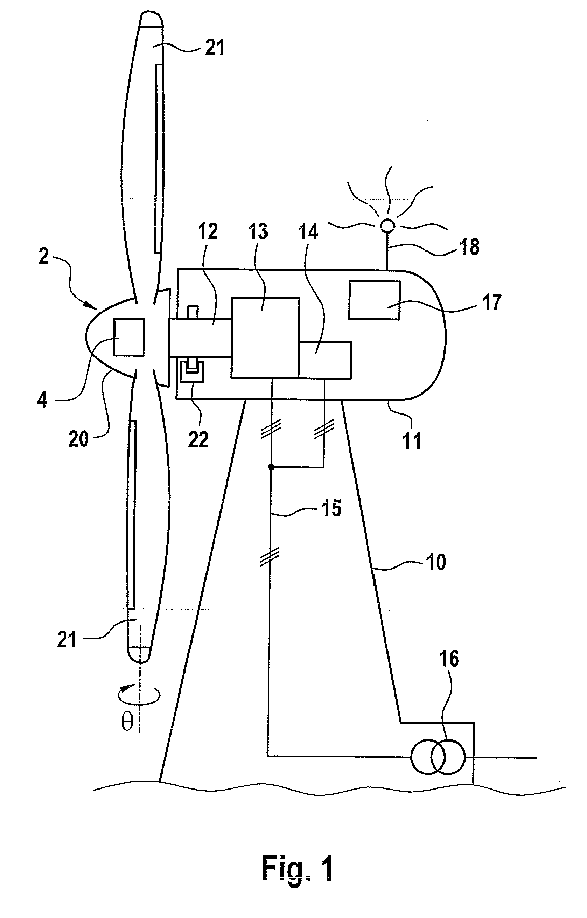

- Fig. 1:: eine Übersichtsdarstellung einer Windenergieanlage gemäß einem Ausführungsbeispiel der Erfindung;

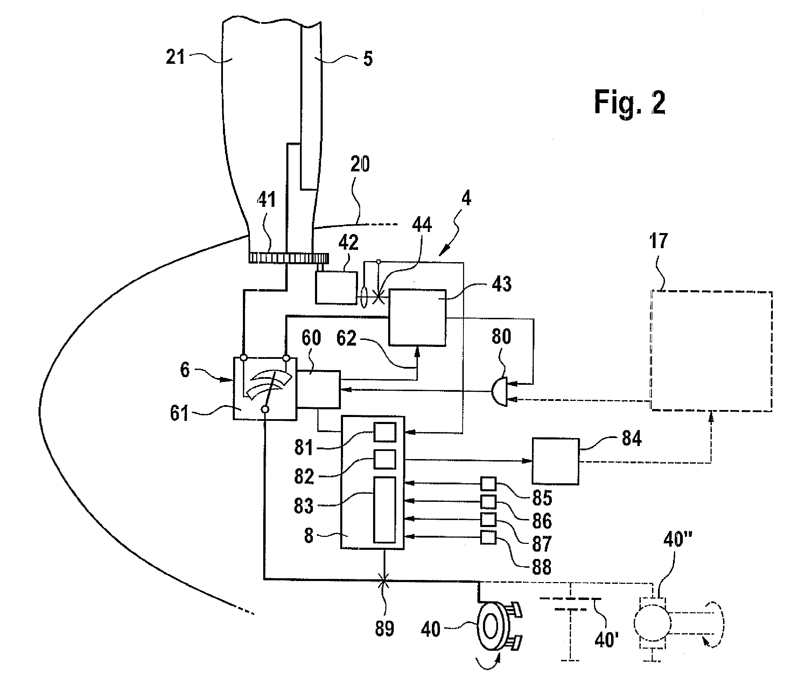

- Fig. 2:: eine schematische Darstellung der elektrischen Komponenten in der Nabe der Windenergieanlage gemäß Fig. 1; und
- Fig. 3:: Statusdiagramme über der Zeit.

Eine Windenergieanlage gemäß einem Ausführungsbeispiel der Erfindung umfasst eine auf einem Turm 10 in Azimutrichtung schwenkbar angeordnete Gondel 11. An ihrer Stirnseite ist ein Rotor 2 drehbar angeordnet, der über eine Generatorwelle 12 einen Generator 13 zur Erzeugung elektrischer Energie antreibt. Der Generator 13 ist in dem dargestellten Ausführungsbeispiel als doppelt gespeister Asynchrongenerator ausgeführt und mit einem Umrichter 14 zusammengeschaltet.

Die von dem Generator 13 und dem Umrichter 14 bereitgestellte elektrische Leistung wird über ein im Turm 10 verlaufendes Leistungskabel 15 zum Turmfuß geführt und ist dort an einen Maschinentransformator 16 angeschlossen zur Abgabe der erzeugten elektrischen Energie auf einem Mittelspannungsniveau.

Weiter ist in der Gondel 11 eine Betriebssteuerung 17 angeordnet. Sie ist dazu ausgebildet, die einzelnen Systeme der Windenergieanlage anzusteuern und außerdem ist sie zur Kommunikation, bspw. über eine Funkschnittstelle 18, mit übergeordneten Leiteinrichtungen, wie einem Parkmaster in einem Windpark und/oder Netzleitstellen eines Versorgungsnetzbetreibers, verbunden.

Der Rotor 2 umfasst mehrere Rotorblätter 21, die bezüglich ihres Pitchwinkels θ verstellbar an einer Nabe 20 an dem Ende der Generatorwelle 12 angeordnet sind. Zur Verstellung des Pitchwinkels θ ist ein Pitchsystem 4 vorgesehen, welches einen an der Blattwurzel des jeweiligen Rotorblatts 21 angeordneten Zahnring 41 umfasst, in das ein Antriebsritzel eines nabenfest angeordneten Stellmotors 42 eingreift. Zur Ansteuerung des Pitchsystems 4 kann eine eigene Pitchsteuerung 43 in der Nabe vorgesehen sein. Die Pitchsteuerung 43 erhält Führungssignale von der Betriebssteuerung 17. Weiter ist in der Nabe 20 eine Nabenleistungsquelle 40 für das Pitchsystem 4 vorgesehen. Die Nabenleistungsquelle 40 kann insbesondere ein Schleifring sein, über den elektrische Leistung aus der Gondel 11 in die Nabe 20 geführt wird. Es kann sich aber alternativ oder zusätzlich auch um eine Batterie 40' oder um einen auf der Welle 12 ablaufenden Wellengenerator 40" handeln. Die Funktionsweise des Pitchsystems 4 ist so, dass ein Sollwert für den Pitchwinkel θₛ von der Bebtriebssteuerung 17 vorgegeben wird, und dieser dann von der Pitchsteuerung 43 durch Betätigen des Antriebsmotors 42, welcher auf den Zahnring 41 der Rotorblätter 21 wirkt, eingestellt wird, indem die Rotorblätter 21 so weit verdreht werden, bis der richtige Pitchwinkel θ erreicht ist.

Die Rotorblätter 21 sind weiter mit einer Blattheizung 5 versehen, die vorzugsweise zumindest im Bereich einer Nasenleiste der Rotorblätter 21 angeordnet ist. Die Blattheizung 5 ist in dem dargestellten Ausführungsbeispiel als ein elektrisches Heizelement ausgeführt. Sie stellt einen elektrischen Zusatzverbraucher in der Nabe 20 dar, der im Heizbetrieb ("Hochlastbetrieb") beträchtliche elektrische Leistung erfordert. Zur Energieversorgung dient besagte Nabenleistungsquelle 40, welche auch das Pitchsystem 4 versorgt. Um die Leistung zwischen dem Pitchsystem 4 einerseits und der Blattheizung 5 andererseits aufzuteilen, ist erfindungsgemäß ein Pitchleistungssteuergerät 6 vorgesehen. Es weist einen Steuerblock 60 und einen Schaltblock 61 mit einem Leistungseingang und zwei Leistungsausgängen auf. An dem Leistungseingang ist die Nabenleistungsquelle 40 angeschlossen. An einem der beiden Ausgänge ist das Pitchsystem 4 und an dem anderen der beiden Ausgänge die Blattheizung 5 angeschlossen. Das Pitchleistungssteuergerät kann zu einer digitalen Umschaltung ausgebildet sein, bei der jeweils nur einem der beiden Systeme Leistung zugeführt wird; bei dem dargestellten Ausführungsbeispiel soll es sich jedoch um ein System handeln, welches die Leistung aufteilen kann, so dass beide Systeme auch gleichzeitig mit (wenn auch nicht unbedingt gleich großer) Leistung versorgt sind.

Betätigt wird der Schaltblock 61 des Pitchleistungssteuergeräts 6 von einem Steuerblock 60. Er ist dazu ausgebildet, in einem Heizbetrieb die von dem Pitchsystem 4 aufgenommene Leistung zu verringern. Dazu ist der Steuerblock 60 über eine erste Signalleitung 62 an die Pitchsteuerung 43 angeschlossen. Damit wird erreicht, dass die Leistungsaufnahme des Pitchsystems 4 verringert ist und so für den Heizbetrieb stets ausreichend Leistung für die Blattheizung 5 zur Verfügung steht.

Mit dem Pitchleistungssteuergerät 6 wirkt eine Adaptionseinrichtung 8 zusammen. Sie weist mehrere Funktionsmodule auf, nämlich ein Stromkontrollmodul 81, ein Drosselmodul 82 und ein Unterbrechungsmodul 83. Das Stromkontrollmodul 81 ist dazu ausgebildet, im Heizbetrieb die Betätigung des Pitchsystems 4 mittels eines Leistungssensors 44 zu überwachen. Erfolgt eine derartige Betätigung, dass ein kritischer Wert für die Leistungsaufnahme erreicht wird (bspw. würde zusammen mit dem Blattheizung 90 % der Leistung der Nabenleistungsquelle 40 abgerufen), so erfolgt zum Schutz der Nabenleistungsquelle 40 vor Überlastung eine Beeinflussung von Reglerparametern der Pitchsystemsteuerung 43. Insbesondere kann eine Begrenzung der Verstellgeschwindigkeit und -beschleunigung für den Pitchantrieb 42 damit bewirkt werden.

Das Drosselmodul 82 ist dazu ausgebildet, die Windenergieanlage vorbeugend mit geringerer Belastung zu betreiben. Dazu werden ausgehend von dem bei den jeweiligen Umweltbedingungen sich ergebenden normalen Betriebspunkt, insbesondere in Bezug auf die Parameterdrehzahl und Leistung, Offsetwerte gebildet, welche von den Werten für den normalen Betriebspunkt abgezogen werden, um somit modifizierte Sollwerte für die Parameter in einem modifizierten Betriebspunkt zu erzeugen. Dazu ist ein Interface 84 vorgesehen, welches die veränderten Daten für den Betriebspunkt an die Betriebssteuerung 17 anlegt. Konkret bedeutet dies, dass bspw. ausgehend von einem Betriebspunkt mit einer Drehzahl n_{B} von 20 U/min in einem Teillastbetriebsfall die Solldrehzahl für den Heizbetrieb ein modifizierter Betriebspunkt mit einer abgesenkten Drehzahl n_{B}' von 16 U/min bestimmt wird, wobei die Toleranzgrenzen und die Eingriffschwelle der Pitchsystemsteuerung 43 jedoch nicht entsprechend nachgezogen werden. Damit besteht ein erheblicher Puffer, so dass auch bei plötzlich stärker einfallenden Winden keine Betätigung des Pitchsystems 4 zu erfolgen braucht, so dass die von der Nabenleistungsquelle 40 zur Verfügung gestellte Leistung nahezu voll umfänglich für die Blattheizung 5 verwendet werden kann. Für den Volllastbetriebsfall gilt Entsprechendes. Hier würde statt der Drehzahl der Betriebspunkt für die Leistung entsprechend abgesenkt, wodurch sich eine entsprechende Leistungsreserve ergibt, die wiederum die Einschaltwahrscheinlichkeit des Pitchsystems 4 entsprechend verringert.

Das Unterbrechungsmodul 83 weist mehrere Signaleingänge auf, die jeweils dazu ausgebildet sind, bestimmte Zustände zu detektieren. So ist an einem ersten Signaleingang ein Detektor 85 für einen Spannungseinbruch angeordnet. Es sei angemerkt, dass es sich bei dem Detektor 85 um ein eigenständiges Bauelement handeln kann, oder um eine Verbindung zu einer anderen Einrichtung, die ohnehin bereits vorhanden ist und eine Spannungseinbruchsdetektion durchführt (bspw. in der Betriebssteuerung 17). Wird das Auftreten eines Spannungseinbruchs auf diese Weise detektiert, so wirkt das Unterbrechungsmodul 83 so auf das Pitchleistungssteuergerät 6 ein, dass die von der Nabenleistungsquelle 40 dem Blattheizung 5 zur Verfügung gestellte Leistung stark verringert oder gar ganz abgeschaltet wird. Damit wird erreicht, dass in einer solchen außergewöhnlichen Betriebssituation das Pitchsystem 4 ausreichend mit Leistung versorgt ist, um auch große Pitchänderungen mit hoher Pitchverstellgeschwindigkeit und Beschleunigung durchführen zu können. Entsprechend sind ein Detektor 86 für Netzwiederkehr, ein Detektor 87 für Pitchnotfahrt und weiter ein Sensor 89 zur Erkennung vorgesehen, wenn der maximale Stromfluss aus der Nabenleistungsquelle 40 erreicht ist. Weiter ist ein Überdrehzahldetektor 88 angeschlossen, so dass bei Erreichen einer Grenzdrehzahl das Suspend-Signal von dem Unterbrechungsmodul 83 ausgegeben wird. Wird dabei außerdem ein Grenzwert für eine Drehzahlbeschleunigung überschritten, so wird eine Rotorbremse 22 betätigt.

Weiter kann eine Freigabeeinrichtung 80 vorgesehen sein, die von dem Pitchsystem 4 betätigt ist. Sie umfasst zwei Eingänge, einen Anschluss für ein vom Pitchsystem 4 ausgegebenes Freigabesignal und einen Anschluss für ein von der Betriebssteuerung 17 ausgegebenes Anforderungssignal für den elektrischen Zusatzverbraucher. Ein Ausgang der Freigabeeinrichtung 80 ist an das Pitchleistungssteuergerät angeschlossen. Die Freigabeeinrichtung 80 wirkt so mit dem Pitchleistungssteuergerät 6 zusammen, dass beim Auftreten von vorbestimmten Anlagenzuständen der elektrische Zusatzverbraucher, das Heizsystem 5, eingeschaltet und in den Heizbetrieb gewechselt wird. Dies kann direkt durch das von dem Pitchsystem 4 an die Freigabeeinrichtung 80 angelegte Signal bewirkt werden, wodurch das Pitchleistungssteuergerät 6 die Leistung dem Heizsystem 5 zuteilt. Es kann aber auch eine zweistufige Freigabe vorgesehen sein, wobei von der Betriebssteuerung 17 ein Anforderungssignal für den Heizbetrieb an die Freigabeeinrichtung 80 angelegt ist, welches nur dann an das Pitchleistungssteuergerät durchgeschaltet wird, wenn auch das Freigabesignal von der Pitchsteuerung 4 vorliegt. Beispiele für solche Betriebszustände sind insbesondere Anlagenbetrieb in Teillast, wenn sich das Pitchsystem 4 in einer Art Sleep-Modus befindet, Anlagenbetrieb bei Regelwind mit nur geringfügigen Pitchaktivitäten oder auch Anlagenstillstand.

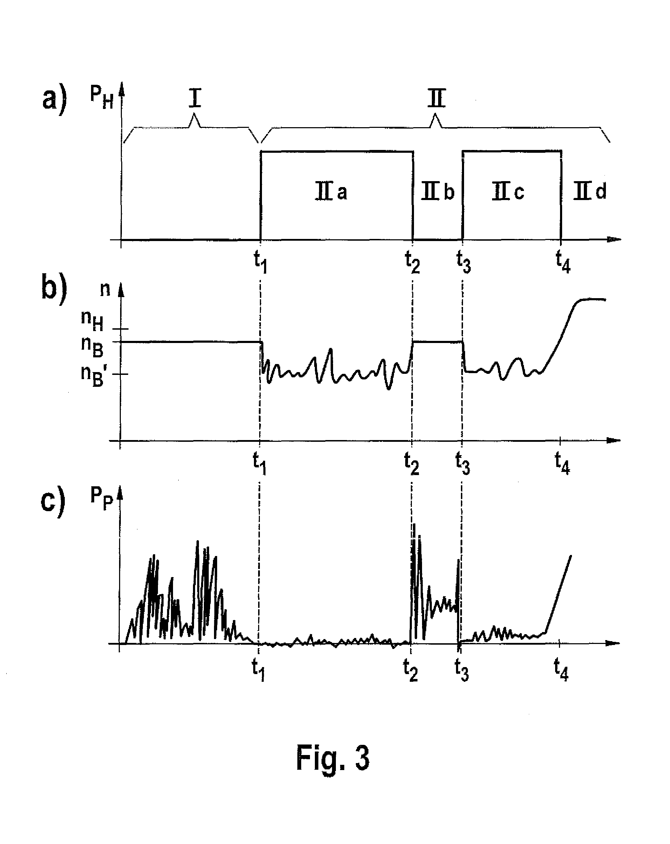

Ein Beispiel für eine Wirkungsweise ist in Fig. 3 dargestellt. In Fig. 3a sind verschiedene Phasen mit oder ohne eingeschaltetem Heizbetrieb dargestellt. In Phase I ist der Heizbetrieb noch nicht eingeschaltet, d. h. die Windenergieanlage wird im Normalbetrieb betrieben. In der folgenden Phase II wird der Heizbetrieb aktiviert. In Fig. 3b sind die vom Pitchsystem 4 eingeregelten Drehzahlwerte dargestellt. In Fig. 3c ist die Aktivität des Pitchsystems 4 in Gestalt der Betätigung des Pitchstell-antriebs 42 zur Einstellung eines Pitchwinkels Θ dargestellt, mit dem die durch den Betriebspunkt vorgegebene Drehzahl gemäß Fig. 3b erreicht wird. Man erkennt, dass in Phase I zur Einhaltung der Drehzahlvorgabe eine rege Aktivität des Pitchsystems erforderlich ist. Zum Zeitpunkt t₁ bestimmt das Drosselmodul 82 einen modifizierten Betriebspunkt mit einer niedrigeren Drehzahl n_{B}'. Das Pitchleistungssteuergerät 6 wird aktiviert und teilt einen Großteil der Leistung der Blattheizung 5 zu. Ferner ist das Stromkontrollmodul 81 betätigt. Man erkennt die Wirkung in den Figuren 3b und c, wonach in Phase II die Drehzahlabweichungen größer sind als in der vorhergehenden Betriebsphase I ohne Heizbetrieb, jedoch sind diese Abweichungen dank der präemptiven Drehzahlabsenkung unkritisch und überschreiten nicht die Drehzahl n_{B} des vorher eingestellte Betriebspunkts; der Betrieb ist also sicher. Da somit größere Abweichungen zugelassen werden können, ist die Aktivität des Pitchsystems 4 in Phase II reduziert. Dies ist in Fig. 3c gut zu erkennen. Da die Stellamplituden und die Geschwindigkeit sowie Beschleunigung verringert sind, ist die Stromaufnahme des Pitchsystems 4 entsprechend geringer, so dass ausreichend Leistung für den Betrieb der Blattheizung 5 zur Verfügung steht.

Dieser Zustand hält an, bis in der Phase IIb ein Kurzschluss im Netz auftritt. Dieser wird von dem Detektor 85 erkannt und als Signal an das Unterbrechungsmodul 83 angelegt. Dieses sperrt nunmehr den Heizbetrieb, indem das Pitchleistungssteuergerät 6 so angesteuert wird, dass die Leistung nur dem Pitchsystem 4 zur Verfügung gestellt wird. Die Leistung für die Blattheizung 5 fällt damit weg. Entsprechend fallen auch der modifizierte Betriebspunkt und die Einschränkung in Bezug auf die Aktivität des Pitchsystems weg, so dass die Windenergieanlage voll umfänglich auf diesen Störungsfall reagieren kann. Diese Phase IIb hält an, bis über den Detektor 86 die Netzwiederkehr erkannt wird. Dann folgt in Phase IIc die Rückkehr zum Heizbetrieb, der entsprechend der Phase IIa abläuft.

Im weiteren sei angenommen, dass es zu einer Überdrehzahl des Rotors 2 kommt (zum Beispiel wegen einer Unterspannung im Netz, an das der Transformator 16 angeschlossen ist. Die Drehzahl überschreitet zum Zeitpunkt t4 die obere Drehzahlgrenze n_{H} mit stark steigender Tendenz (d. h. großer Drehzahlbeschleunigung). Dies wird von dem Überdrehzahldetektor 88 erkannt, und das Unterbrechungsmodul 83 betätigt das Pitchleistungssteuergerät 6 so, dass die Leistung nur dem Pitchsystem 4 zur Verfügung gestellt wird, so dass dieses mit voller Aktivität auf die Überdrehzahl reagieren kann. Um ein aus der hohen Drehzahlbeschleunigung resultierendes Risiko für die Sicherheit der Windenergieanlage vollständig auszuschließen, wird zusätzlich noch die Rotorbremse 22 betätigt, um die Drehzahl zu stabilisieren (Phase IId).

## Patentansprüche

1. Windenergieanlage umfassend einen Rotor (2) mit Blättern (21) und einem damit angetriebenen Generator (13) zur Erzeugung elektrischer Energie, wobei die Blätter (21) pitchverstellbar sind und ein Pitchsystem (4) zur Verstellung des Pitchwinkels (θ) der Blätter (21) vorgesehen ist, das aus einer Nabenleistungsquelle (40) gespeist ist, wobei ferner ein elektrischer Zusatzverbraucher (5) an der Nabe vorgesehen ist,
**dadurch gekennzeichnet, dass**
ein Pitchleistungssteuergerät (6) vorgesehen ist, welches die Leistung der Nabenleistungsquelle (40) zwischen Pitchsystem (4) und elektrischem Zusatzverbraucher (5) dynamisch verteilt und weiter auf das Pitchsystem (4) so einwirkt, dass dessen Leistungsaufnahme im Hochlastbetrieb verringert ist.

2. Windenergieanlage nach Anspruch 1,
**dadurch gekennzeichnet, dass**
eine Adaptionseinrichtung (8) vorgesehen ist, die Betriebsbedingungen des Pitchsystems (4) und/oder des elektrischen Zusatzverbrauchers (5) überwacht und auf das Pitchleistungssteuergerät (6) einwirkt.

3. Windenergieanlage nach Anspruch 2,
**dadurch gekennzeichnet, dass**
die Adaptionseinrichtung (8) ein Stromkontrollmodul (81) aufweist, welches den Stromfluss am Pitchsystem (4) überwacht und bei Erreichen eines Grenzwerts Betriebsparameter des Pitchsystems (4) modifiziert.

4. Windenergieanlage nach Anspruch 3,
**dadurch gekennzeichnet, dass**
das Stromkontrollmodul (81) einen Belastungssensor (44) umfasst.

5. Windenergieanlage nach einem der Ansprüche 2 bis 4,
**dadurch gekennzeichnet, dass**
die Adaptionseinrichtung (8) mit einem Drosselmodul (82) für die Pitchsteuerung (43) versehen ist.

6. Windenergieanlage nach Anspruch 5,
**dadurch gekennzeichnet, dass**
das Drosselmodul (82) dazu ausgebildet ist, zu dem jeweiligen Betriebspunkt der Windenergieanlage einen gedrosselten Betriebspunkt mit reduzierten Sollwerten für Drehzahl und/oder Leistung zu bestimmen und entsprechend modifizierte Sollwerte an die Pitchsteuerung (43) anzulegen.

7. Windenergieanlage nach einem der vorhergehenden Ansprüche 5 oder 6,
**dadurch gekennzeichnet, dass**
das Drosselmodul (82) weiter dazu ausgebildet ist, die Regelgüte der Pitchsteuerung zu verringern.

8. Windenergieanlage nach einem der Ansprüche 2 bis 7,
**dadurch gekennzeichnet, dass**
die Adaptionseinrichtung (8) ein Unterbrechungsmodul (83) aufweist, welches dazu ausgebildet ist, auf das Pitchleistungssteuergerät (6) derart einzuwirken, dass beim Auftreten vorbestimmter Zustände der Windenergieanlage der Hochlastbetrieb beendet wird.

9. Windenergieanlage nach einem der vorangehenden Ansprüche,
**dadurch gekennzeichnet, dass**
eine Freigabeinrichtung (80) vorgesehen ist, welche von dem Pitchsystem (4) angesteuert ist und ein Umschalten des Pitchleistungssteuergeräts (6) in den Hochlastbetrieb bewirkt.

10. Windenergieanlage nach Anspruch 9,
**dadurch gekennzeichnet, dass**
die Betriebssteuerung (17) der Windenergieanlage über eine Anforderungssignalleitung mit einem Eingang der Freigabeeinrichtung (80) verbunden ist.

11. Verfahren zum Betreiben einer Windenergieanlage umfassend einen Rotor (2) mit Blättern (21) und einem damit angetriebenen Generator (13) zur Erzeugung elektrischer Energie, wobei die Blätter (21) pitchverstellbar sind und ein Pitchsystem (4) zur Verstellung des Pitchwinkels (θ) der Blätter (21) vorgesehen ist, das aus einer Nabenleistungsquelle (40) gespeist ist, wobei ferner ein elektrischer Zusatzverbraucher (5) vorgesehen ist, der in einem Hochlastbetrieb betätigt wird,
**dadurch gekennzeichnet, dass**
im Hochlastbetrieb der elektrische Zusatzverbraucher (5) aus der Nabenleistungsquelle (40) gespeist wird und die dem Pitchsystem (4) aus der Nabenleistungsquelle (40) aufgenommene Leistung verringert wird.

12. Verwendung einer Adaptionseinrichtung (8) nach einem der Ansprüche 2 bis 10 in einem Verfahren gemäß Anspruch 11.

## Claims

1. Wind energy installation comprising a rotor (2) having blades (21) and a generator (13), which is driven by the latter, for generating electrical energy, wherein the blades (21) are adjustable in terms of pitch and a pitch system (4) for adjusting the pitch angle (□□) of the blades (21) is provided which is fed from a hub power source (40), wherein also a supplementary electrical load (5) is provided on the hub,
**characterized in that**
a pitch power controller (6) is provided which dynamically distributes the power from the hub power source (40) between the pitch system (4) and the supplementary electrical load (5) and in addition acts on the pitch system (4) such that the power draw by the latter is reduced in the high-load mode.

2. Wind energy installation according to Claim 1, **characterized in that** an adaptation device (8) is provided which monitors operating conditions for the pitch system (4) and/or for the supplementary electrical load (5) and acts on the pitch power controller (6).

3. Wind energy installation according to Claim 2, **characterized in that** the adaptation device (8) has a current surveillance module (81) which monitors the flow of current on the pitch system (4) and modifies operating parameters for the pitch system (4) when a limit value is reached.

4. Wind energy installation according to Claim 3, **characterized in that** the current surveillance module (81) comprises a load sensor (44).

5. Wind energy installation according to one of Claims 2 to 4, **characterized in that** the adaptation device (8) is provided with a restrictor module (82) for the pitch control system (43).

6. Wind energy installation according to Claim 5, **characterized in that** the restrictor module (82) is designed to determine a restricted operating point with reduced target values for speed and/or power at the respective operating point of the wind energy installation and to apply correspondingly modified target values to the pitch control (43).

7. Wind energy installation according to one of the preceding Claims 5 and 6 **characterized in that** the restrictor module (82) is in addition designed to reduce the regulatory quality of the pitch control.

8. Wind energy installation according to one of Claims 2 to 7, **characterized in that** the adaptation device (8) has an interruption module (83) which is designed to act on the pitch power controller (6) such that the high-load mode is terminated when predetermined states of the wind energy installation occur.

9. Wind energy installation according to one of the preceding claims, **characterized in that** an enabling device (80) is provided which is actuated by the pitch system (4) and prompts the pitch power controller (6) to change over to the high-load mode.

10. Wind energy installation according to Claim 9, **characterized in that** the operating control system (17) of the wind energy installation is connected to an input of the enabling device (80) by means of a request signal line.

11. Method for operating a wind energy installation comprising a rotor (2) having blades (21) and a generator (13), which is driven by the latter, for generating electrical energy, wherein the blades (21) are adjustable in terms of pitch and a pitch system (4) for adjusting the pitch angle (□) of the blades (21) is provided which is fed from a hub power source (40), wherein in addition a supplementary electrical load (5) is provided which is operated in a high-load mode,
**characterized in that**
in the high-load mode the supplementary electrical load (5) is fed from the hub power source (40) and the power drawn for the pitch system (4) from the hub power source (40) is reduced.

12. Use of an adaptation device (8) according to one of Claims 2 to 10 in a method according to Claim 11.

## Revendications

1. Éolienne comportant un rotor (2) avec des pales (21) et un générateur (13) actionné par celles-ci pour générer de l'énergie électrique, les pales (21) étant réglables par pas et un système de pas (4) pour le réglage de l'angle de pas (θ) des pales (21) étant prévu, lequel est alimenté à partir d'une source de puissance du moyeu (40), un consommateur électrique supplémentaire (5) étant prévu sur le moyeu,
**caractérisée en ce**
**qu'**il est prévu un dispositif de commande de la puissance des pales (6), qui répartit de manière dynamique la puissance de la source de puissance du moyeu (40) entre le système de pas (4) et le consommateur électrique supplémentaire (5) et, en outre, agit sur le système de pas (4) de telle sorte que la puissance absorbée par celui-ci est diminuée en cas de fonctionnement sous charge élevée.

2. Éolienne selon la revendication 1, **caractérisée en ce qu'**il est prévu un dispositif d'adaptation (8) qui contrôle les conditions de fonctionnement du système de pas (4) et/ou du consommateur électrique supplémentaire (5) et agit sur le dispositif de commande de la puissance des pales (6).

3. Éolienne selon la revendication 2, **caractérisée en ce que** le dispositif d'adaptation (8) comporte un module de contrôle du courant (81) qui contrôle le flux de courant sur le système de pas (4) et modifie les paramètres de fonctionnement du système de pas (4) lorsqu'une valeur limite est atteinte.

4. Éolienne selon la revendication 3, **caractérisée en ce que** le module de contrôle du courant (81) comporte un capteur de charge (44).

5. Éolienne selon l'une quelconque des revendications 2 à 4, **caractérisée en ce que** le dispositif d'adaptation (8) est muni d'un module de réduction de puissance (82) pour la commande des pales (43).

6. Éolienne selon la revendication 5, **caractérisée en ce que** le module de réduction de puissance (82) est configuré pour déterminer au point de fonctionnement respectif de l'éolienne un point de fonctionnement limité avec des valeurs de consigne réduites pour la vitesse de rotation et/ou la puissance et pour appliquer de manière correspondante des valeurs de consigne modifiées à la commande des pales (43).

7. Éolienne selon l'une des revendications précédentes 5 ou 6, **caractérisée en ce que** le module de réduction de puissance (82) est configuré, en outre, pour diminuer la qualité de réglage de la commande des pales.

8. Éolienne selon l'une quelconque des revendications 2 à 7, **caractérisée en ce que** le dispositif d'adaptation (8) comporte un module d'interruption (83) qui est configuré pour agir sur le dispositif de commande de la puissance des pales (6) de telle sorte que le fonctionnement sous charge élevée se termine lorsque des états prédéterminés de l'éolienne se produisent.

9. Éolienne selon l'une quelconque des revendications précédentes, **caractérisée en ce qu'**il est prévu un dispositif de déblocage (80) qui est activé par le système de pas (4) et induit une commutation du dispositif de commande de la puissance des pales (6) vers le fonctionnement sous charge élevée.

10. Éolienne selon la revendication 9, **caractérisée en ce que** la commande de fonctionnement (17) de l'éolienne est reliée à une entrée du module de déblocage (80) via une ligne de transmission des signaux de demande.

11. Procédé pour faire fonctionner une éolienne comportant un rotor (2) avec des pales (21) et un générateur (13) actionné par celles-ci pour générer de l'énergie électrique, les pales (21) étant réglables par pas et un système de pas (4) pour le réglage de l'angle de pas (θ) des pales (21) étant prévu, lequel est alimenté à partir d'une source de puissance du moyeu (40), en outre, un consommateur électrique supplémentaire (5) étant prévu sur le moyeu qui est actionné en cas de fonctionnement sous charge élevée,
**caractérisé en ce que**
dans le fonctionnement sous charge élevée, le consommateur électrique supplémentaire (5) est alimenté à partir de la source de puissance du moyeu (40) et la puissance absorbée par le système de pas (4) à partir de la source de puissance du moyeu (40) est diminuée.

12. Utilisation d'un dispositif d'adaptation (8) selon l'une quelconque des revendications 2 à 10 dans un procédé selon la revendication 11.
